# EUROPÄISCHE PATENTANMELDUNG

(11) **EP 0 865 868 A2**
(43) Veröffentlichungstag der Anmeldung: **23.09.1998**
(21) Anmeldenummer: 97122274.0
(22) Anmeldetag: 17.12.1997
(51) Int. Cl.: B23Q 11/08

(54) **Handhabungssystem zur Versorgung einer Bearbeitungseinrichtung mit Teilen**

(30) Priorität: 22.03.1997 DE 19712115
(71) Anmelder: FELSOMAT GmbH & Co. KG, D-75203 Königsbach-Stein (DE)
(72) Erfinder: Jäger, Helmut F., 75203 Königsbach-Stein (DE)
(74) Vertreter: Gahlert, Stefan, Dr.-Ing.

(57) **Zusammenfassung**

Es wird ein Handhabungssystem zur Versorgung einer Bearbeitungseinrichtung (12) mit Teilen (70) angegeben, mit einem Arbeitsraum (14), innerhalb dessen ein Bereitstellungsmodul (18) zur Bereitstellung und Aufnahme von Teilen vorgesehen ist, mit einem Stapelaustauschmodul (20) zum Ein- und Ausschleusen von Teilen (70) in bzw. aus dem Arbeitsraum (14), wobei der Stapelaustauschmodul (20) eine um eine vertikale Drehachse (36) verdrehbare Dreheinheit (22) aufweist, an der ein Bereitstellungsplatz (24) innerhalb des Arbeitsraumes (14) und ein Ladeplatz (26) zum Be- und Entladen von Teilen (70) außerhalb des Arbeitsraumes (14) vorgesehen sind, wobei die Dreheinheit (22) in zwei um 180° gegeneinander versetzte Arbeitspositionen (28, 30) verdrehbar ist, um Teilestapel auf den Bereitstellungsplatz (24) zu überführen und von diesem auf den Ladeplatz (26) zu überführen. Der Ladeplatz (26) ist durch mindestens ein um die vertikale Drehachse (36) verschwenkbar angeordnetes Verkleidungselement (38, 39, 40) nach außen abgegrenzt. Alternativ oder zusätzlich ist die Dreheinheit (22) zusätzlich zu den um jeweils 180° gegeneinander versetzten Arbeitspositionen (28, 30) in zumindest eine Zwischenposition (32, 34) verdrehbar, in der zumindest ein Zusatzmodul zur Handhabung von Teilen (70) aktivierbar ist, um etwa Teile in den Arbeitsraum (14) einzuschleusen oder aus diesem auszuschleusen. Das erfindungsgemäße Handhabungssystem ermöglicht einen erheblich kompakteren modularen Aufbau im Vergleich zu herkömmlichen Systemen.

## Beschreibung

Die Erfindung betrifft ein Handhabungssystem zur Versorgung einer Bearbeitungseinrichtung mit Teilen, mit einem Arbeitsraum, innerhalb dessen ein Bereitstellungsmodul zur Bereitstellung und Aufnahme von Teilen vorgesehen ist, mit einem Stapelaustauschmodul zum Ein- und Ausschleusen von Teilen in bzw. aus dem Arbeitsraum, wobei der Stapelaustauschmodul eine um eine vertikale Drehachse verdrehbare Dreheinheit aufweist, an der ein Bereitstellungsplatz innerhalb des Arbeitsraumes und ein Ladeplatz zum Be- und Entladen von Teilen außerhalb des Arbeitsraumes vorgesehen ist, wobei die Dreheinheit in zwei um 180° gegeneinander versetzte Arbeitspositionen verdrehbar ist, um Teilestapel auf den Bereitstellungsplatz zu überführen und von diesem auf den Ladeplatz zu überführen.

Ein derartiges Handhabungssystem ist aus der EP 0 673 711 A1 bekannt.

Hierbei ist der Arbeitsraum von einer Schutzwand nach außen abgeschlossen und als Bereitstellungsmodul eine als Palettenumsetzer ausgebildete Vorrichtung zur Bereitstellung von Werkstückträgern mit unbearbeiteten Werkstücken und zur Aufnahme von Werkstückträgern nach Bearbeitung vorgesehen. Dem Bereitstellungsmodul ist eine Ladevorrichtung zur Übernahme von Werkstücken und zur Übergabe an die nachgeordnete Bearbeitungseinrichtung zugeordnet. Die Zuführung von Werkstückträgern in den Arbeitsraum und zur Entnahme aus diesem geschieht durch einen Stapelaustauschmodul, der als Drehtisch mit einem H-förmigen Drehgestell ausgebildet ist, in das Werkstückträgerstapel auf Rollwagen eingefahren werden können. Der Drehtisch weist im Bereich des Stapelaustauschmoduls eine Schottwand auf, durch die der Arbeitsraum vollständig abgetrennt ist, so daß während der Bearbeitung der Werkstückträger innerhalb des Arbeitsraumes ohne Gefahr ein Wechsel der Werkstückträgerstapel durchgeführt werden kann. Hierbei ist die Position des Stapelaustauschmoduls außerhalb des Arbeitsraumes, die zur Auf- und Entnahme von Werkstückträgerstapeln ausgebildet ist, durch Flügeltüren vollständig nach außen abgeschlossen, um so vor dem Arbeitsraum einen Laderaum zu schaffen, in dem unabhängig von der Bearbeitung von Werkstücken innerhalb des Arbeitsraumes das Be- bzw. Entladen von Werkstückträgerstapeln durchgeführt werden kann. Innerhalb des Arbeitsraumes können weitere Zusatzmodule wie etwa eine Schleuseneinrichtung, eine Prüfeinrichtung oder dgl. vorgesehen sein, um Zusatzfunktionen durchzuführen. Jedoch wird durch derartige Zusatzmodule grundsätzlich der Platzbedarf vergrößert.

Bei modernen Fertigungssystemen, bei denen zahlreiche Bearbeitungseinrichtungen, die jeweils über ein damit gekoppeltes Handhabungssystem mit Teilen versorgt werden, in einer großen Produktionsanlage aufgestellt und ggf. miteinander gekoppelt sind, spielt naturgemäß der Platzbedarf der Gesamtanlage eine erhebliche Rolle, da die Gesamtkosten hiervon abhängen. Auch lassen sich bei einem verringerten Platzbedarf der Einzelkomponenten die Transportwege zwischen den Einzelkomponenten reduzieren, was zu einer Verringerung der Transportzeiten und zu einer Verkürzung der Durchlaufzeiten führt.

Es ist daher die Aufgabe der vorliegenden Erfindung, ein verbessertes Handhabungssystem zur Versorgung einer Bearbeitungseinrichtung mit Teilen zu schaffen, das einen möglichst geringen Platzbedarf aufweist und mit anderen Komponenten in möglichst platzsparender Weise modular kombinierbar ist.

Diese Aufgabe wird bei einem Handhabungssystem gemäß der eingangs genannten Art erfindungsgemäß dadurch gelöst, daß der Ladeplatz durch mindestens ein um die vertikale Drehachse verschwenkbar angeordnetes Verkleidungselement nach außen abgegrenzt ist.

Erfindungsgemäß wird auf diese Weise die Notwendigkeit eines vollständig nach außen abgetrennten Laderaumes vor dem Arbeitsraum vermieden, da der Ladeplatz durch ein oder mehrere um die vertikale Drehachse der Dreheinheit verschwenkbar angeordnete Verkleidungselemente nach außen abgegrenzt ist. Auf diese Weise wird der zusätzlich im Stand der Technik zur Öffnung von Flügeltüren nach außen bedingte Raum vermieden und die Größe des vor dem Arbeitsraum gebildeten Laderaumes auf die minimale Größe reduziert, die durch die Drehbewegung der Dreheinheit vorgegeben ist. Da das oder die Verkleidungselemente zur Begrenzung des Laderaumes nach außen in Umfangsrichtung der Dreheinheit verschwenkbar sind, wird kein zusätzlicher Platz für die Verkleidungselemente benötigt.

Dies führt ferner dazu, daß das Handhabungssystem modular in Form einer bestimmten Zellengröße ausgebildet werden kann, unabhängig davon, ob das Handhabungssystem mit einem Stapelaustauschmodul zum automatischen Ein- und Ausschleusen von Teilen in den Arbeitsraum versehen ist oder nicht. Dies ist dadurch bedingt, daß der von dem Stapelaustauschmodul innerhalb des Arbeitsraumes notwendige Platz ohnehin vorhanden sein muß, da der Bereitsstellungsmodul innerhalb des Arbeitsraumes ohnehin einen separaten Bereitstellungsplatz benötigt, der auch von dem Stapelaustauschmodul verwendet wird. Bei Verwendung des Stapelaustauschmoduls in dem erfindungsgemäßen Handhabungssystem wird die Grundzelle, die zum Aufbau des erfindungsgemäßen Handhabungssystems verwendet wird, gegenüber einem Handhabungs-System ohne Stapelaustauschmodul somit lediglich durch den etwa halbkreisförmigen Platzbedarf des Stapelaustauschmoduls außerhalb des Arbeitsraumes vergrößert. Insgesamt läßt sich somit der Platzbedarf des erfindungsgemäßen Handhabungssystems gegenüber herkömmlichen Handhabungssystemen deutlich reduzieren und gleichzeitig ein modularer Aufbau unabhängig davon erreichen, ob das Handhabungssystem mit einem Stapelaustauschmodul zum automatischen Ein- und Ausschleusen in bzw. aus dem Arbeitsraum versehen ist oder nicht. Durch eine solchermaßen mögliche Standardisierung lassen sich die Fertigungs- und Lagerkosten erheblich reduzieren.

In vorteilhafter Weiterbildung der Erfindung ist der Arbeitsraum durch eine Schutzverkleidung nach außen abgeschlossen, wobei an der Dreheinheit eine Schottwand vorgesehen ist, durch die der Bereitstellungsplatz innerhalb des Arbeitsraumes von dem Ladeplatz außerhalb des Arbeitsraumes abgetrennt ist.

Durch eine derartige vollständige Abgrenzung des Arbeitsraumes in beiden Arbeitspositionen der Dreheinheit läßt sich mit Hilfe der Schottwand ein aus Gründen des Umfallschutzes notwendiger Abschluß des Arbeitsraumes nach außen in besonders einfacher und kostengünstiger Weise erreichen, wobei eine hohe Zuverlässigkeit gewährleistet ist.

In zusätzlicher Weiterbildung dieser Ausführung ist ein mittleres bewegliches Verkleidungselement vorgesehen, das an beiden Seiten durch zumindest je ein bewegliches Verkleidungselement ergänzt ist, um den Laderaum vollständig nach außen abzugrenzen.

Unabhängig davon, in welcher Drehposition sich die Dreheinheit gerade befindet, kann der Ladeplatz so außerhalb des Arbeitsraumes ständig vollständig nach außen abgeschlossen sein, wobei durch Verschwenken der beweglichen Verkleidungselemente von beiden Seiten her ein Zugang zum Ladeplatz ermöglicht ist. Dies bietet besondere Vorteile, wenn zusätzlich in Zwischenpositionen der Dreheinheit zwischen den beiden Arbeitspositionen ein Zugang von beiden Seiten her erwünscht ist.

Gemäß einer alternativen Ausführung wird die Aufgabe der Erfindung bei einem Handhabungssystem gemäß der eingangs genannten Art dadurch gelöst, daß die Dreheinheit zusätzlich zu den um jeweils 180° gegeneinander versetzten Arbeitspositionen in zumindest eine Zwischenposition verdrehbar ist, in der zumindest ein Zusatzmodul zur Handhabung von Teilen aktivierbar ist.

Auch auf diese Weise wird eine deutliche Reduzierung des Platzbedarfs des Gesamtsystems erreicht. Erfindungsgemäß wurde nämlich erkannt, daß durch die bisher lediglich übliche Ausnutzung des Bereitstellungsplatzes innerhalb des Arbeitsraumes und des gegenüberliegenden Ladeplatzes außerhalb des Arbeitsraumes nur ein Teilbereich des durch die Dreheinheit beanspruchten Platzes genutzt wird. Dadurch, daß nunmehr erfindungsgemäß auch Zwischenpositionen zwischen den beiden aneinander gegenüberliegenden Arbeitspositionen genutzt werden, werden vorteilhaft andere Winkelstellungen der Dreheinheit, die zwischen den beiden um 180° gegeneinander versetzten Arbeitspositionen liegen, genutzt, um so bei gleichem Platzbedarf zusätzliche Funktionen auf dem gleichen Raum unterbringen zu können. Es liegt auf der Hand, daß dies zu einer deutlich kompakteren Bauweise des Handhabungssystems sowie zu einer entsprechenden Kostenreduzierung führt.

In zusätzlicher Weiterbildung dieser Ausführung ist die Dreheinheit zumindest in zwei Zwischenpositionen verdrehbar, die gegenüber den beiden Arbeitspositionen jeweils um 90° versetzt sind.

Auf diese Weise werden beide Seiten neben dem Bereitstellungsplatz innerhalb des Arbeitsraumes und dem Ladeplatz außerhalb des Arbeitsraumes in vorteilhafter Weise platzsparend ausgenutzt.

In zusätzlicher Weiterbildung der Erfindung weist die Dreheinheit eine Schleuseneinrichtung auf, die ein Ein- und Ausschleusen von Teilen in den Zwischenpositionen ermöglicht.

In weiter vorteilhafter Ausgestaltung dieser Ausführung weist hierbei die Schleuseneinrichtung eine mit der Dreheinheit zwangsgekoppelte Verfahreinrichtung zum Ein- und Ausschleusen von Teilen auf.

Vorzugsweise ist hierzu ein Schlitten vorgesehen, der auf einer zwischen den beiden Stapelaufnahmeplätzen verlaufenden Führung verfahrbar ist, und der über ein in einer Führungskurve geführtes Führungselement antreibbar ist.

Durch diese Maßnahmen lassen sich die Zwischenstellungen der Dreheinheit in vorteilhafter Weise zum Antrieb einer Schleuseneinrichtung zum Ein- und Ausschleusen von Teilen in bzw. aus dem Arbeitsraum ermöglichen, ohne daß hierzu ein gesonderter Antrieb erforderlich ist. Vielmehr wird die Antriebsbewegung der Schleuseneinrichtung, die einen auf einer Führung verfahrbaren Schlitten aufweist, unmittelbar vom Drehantrieb der Dreheinheit abgeleitet.

So läßt sich ohne eine Vergrößerung des Platzbedarfes und ohne eine zusätzliche Antriebseinheit eine Schleuseneinheit zum Ein- und Ausschleusen von SPC-Teilen (Prüfteilen) und von NIO-Teilen (defekten Teilen) kostengünstig mit der Dreheinheit kombinieren.

In vorteilhafter Weiterbildung dieser Ausführung ist hierzu die Führung auf der Schottwand befestigt.

Diese Maßnahme hat den Vorteil, daß eine räumliche Trennung bei der Be- und Entnahme von SPC-Teilen und NIO-Teilen erreicht werden kann. So kann ein Ende der Schottwand zur Be- und Entnahme von SPC-Teilen aus dem Schlitten genutzt werden, während bei einer Schlittenposition am anderen Ende der Schottwand eine Entnahme von NIO-Teilen erfolgen kann. Außerdem ist eine konstruktiv einfache und platzsparende Befestigung der Schlittenführung ermöglicht.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung.

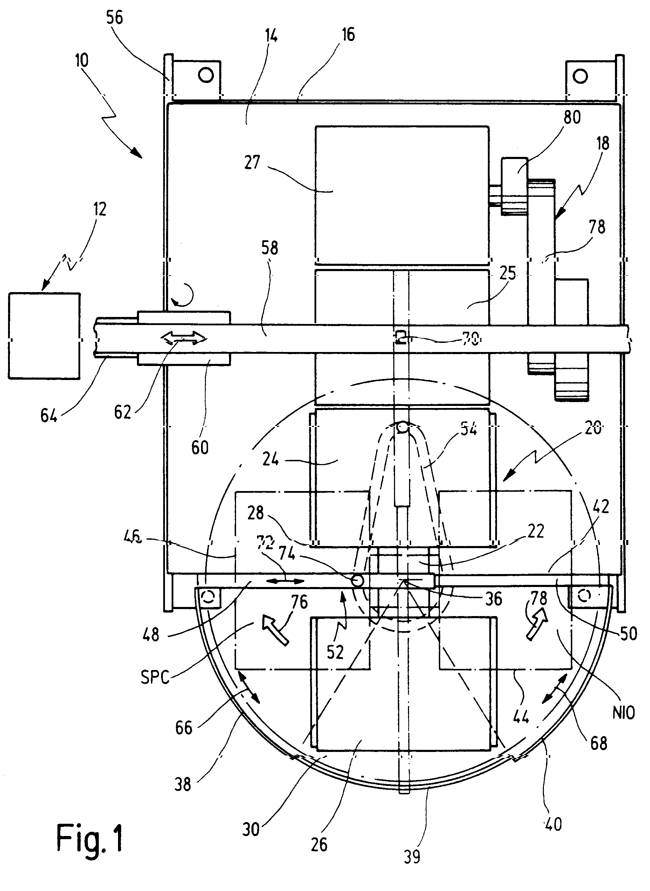

Die einzige Figur, Fig. 1 der Zeichnung, zeigt eine Aufsicht eines erfindungsgemäßen Handhabungssystems in vereinfachter schematischer Darstellung.

Ein erfindungsgemäßes Handhabungssystem ist in Fig. 1 insgesamt mit der Ziffer 10 bezeichnet.

Das Handhabungssystem 10 ist als kompakte Zelle ausgeführt, die auf einem gemeinsamen Sockelmodul 56 montiert ist, an dem alle Komponenten befestigt sind. An diesem Sockelmodul ist eine Schutzverkleidung 16 befestigt, durch die ein Arbeitsraum 14 nach außen abgegrenzt ist. Oberhalb des Arbeitsraumes 14 verläuft ein Portalmodul 58, das in nicht näher dargestellter Weise gleichfalls auf dem Sockelmodul 56 befestigt sein kann. Auf den Portalmodul 58 ist ein Schlitten 60 - wie durch den Doppelpfeil 62 angedeutet, gesteuert verfahrbar, um Teile aus dem darunterliegenden Arbeitsraum 14 aufzunehmen und mittels eines nicht dargestellten Greifers, der an einem Schwenkarm 64 vorgesehen ist, der an dem Schlitten 60 gesteuert verschwenkbar angeordnet ist, zu einer Bearbeitungseinrichtung 12 zu übergeben oder aus dieser zu übernehmen und wieder in den Arbeitsraum 14 zu überführen und auf einem Werkstückträgerstapel abzulegen.

Zum Ein- und Ausschleusen von Werkstückträgern in bzw. aus dem Arbeitsraum 14 ist ein insgesamt mit der Ziffer 20 bezeichneter Stapelaustauschmodul vorgesehen, der eine mit der Ziffer 22 angedeutete Dreheinheit umfaßt, die um eine vertikale Drehachse 36 in verschiedene Positionen verdrehbar ist, um Werkstückträgerstapel von außen in den Arbeitsraum 14 einzuschleusen bzw. aus dem Arbeitsraum 14 zu entfernen. Hierzu ist innerhalb des Arbeitsraumes 14 ein Bereitstellungsplatz 24 zur Aufnahme eines Werkstückträgerstapels vorgesehen, sowie außerhalb des Arbeitsraumes 14 ein Ladeplatz 26 zum Be- und Entladen des Stapelaustauschmoduls. Zwischen dem Bereitstellungsplatz 24 und dem diesem gegenüberliegenden Ladeplatz 26 außerhalb des Arbeitsraumes befindet sich eine mit der Ziffer 42 angedeutete Schottwand, durch die der Arbeitsraum 14 in der ausgezogen gezeichneten Position nach außen abgegrenzt ist.

Durch Verdrehen der Dreheinheit 22 um 180° lassen sich so Werkstückträgerstapel von dem Ladeplatz 26 zu dem Bereitstellungsplatz 24 innerhalb des Arbeitsraumes 14 überführen oder von dem Bereitstellungsplatz 24 aus dem Arbeitsraum zu dem Ladeplatz 26 überführen. Dabei ist der Bereich der Dreheinheit 22 außerhalb des Arbeitsraumes 14 durch Verkleidungselemente 38, 39, 40 vollständig nach außen abgegrenzt. In der Mitte ist ein um die vertikale Drehachse 36 verschwenkbares Verkleidungselement 39 vorgesehen, das sich über einen Winkel von etwa 60 bis 70° erstreckt und das an beiden Seiten durch ein je um die vertikale Drehachse 36 verschwenkbar angeordnetes Verkleidungselement 38, 40 zu einer vollständig nach außen abgeschlossenen Verkleidung ergänzt ist. Das linke Verkleidungselement 38 und das rechte Verkleidungselement 40 lassen sich jeweils in Richtung vor das mittlere Verkleidungselement 39 um die vertikale Drehachse 36 verschwenken, während das mittlere Verkleidungselement 39 wahlweise im Uhrzeigersinn oder im Gegenuhrzeigersinn vor das Verkleidungselement 38 oder vor das Verkleidungselement 40 verschwenkbar ist, um in der geöffneten Position einen Zugang zum Ladeplatz 26 von vorn zu ermöglichen, um Werkstückträgerstapel auf den Ladeplatz 26 überführen oder von diesem entnehmen zu können.

Dabei ist der Stapelaustauschmodul 20 derart ausgeführt, daß die Dreheinheit 22 als etwa H-förmiges Drehgestell ausgebildet ist, das zur Aufnahme von Werkstückträgerstapeln ausgebildet ist, die auf Bodenrollen in den Ladeplatz 26 eingefahren werden und dort verriegelt werden (nicht dargestellt). Der Transport des Werkstückträgerstapels geschieht hierbei auf den Bodenrollen bei Vertaktung der Dreheinheit 22 in die um 180° verdrehte Arbeitsposition 28, um so einen Werkstückträgerstapel von der ersten Arbeitsposition 30 am Ladeplatz 26 auf die zweite Arbeitsposition 28 am Bereitstellungsplatz 24 zu überführen. Hierzu ist also keine zusätzliche Transportvorrichtung erforderlich. Auch während des Wechsels zwischen den beiden Arbeitspositionen 28, 30 bleibt der Werkstückträgerstapel auf den Bodenrollen stehen, so daß die Dreheinheit 22 lediglich zur Aufnahme der seitlichen Stützkräfte und des Drehantriebes ausgelegt sein muß, nicht jedoch zur Aufnahme des Gewichtes des Werkstückträgerstapels und der Werkstücke.

In alternativer Weise kann die Dreheinheit 22 derart ausgeführt sein, daß die Werkstückträgerstapel unmittelbar auf der Dreheinheit 22 aufgesetzt werden und nicht auf Bodenrollen laufen.

Wie in Fig. 1 dargestellt ist, ist die Dreheinheit 22 von der ausgezeichneten Position aus in Richtung der Doppelpfeile 66, 68 sowohl im Uhrzeigersinn als auch im Gegenuhrzeigersinn um jeweils 90° vertaktbar. Es ergeben sich somit also Zwischenpositionen zwischen den beiden Arbeitspositionen 28, 30, die jeweils um 90° gegenüber den Arbeitspositionen versetzt sind. Eine derartige Zwischenposition ist durch die strichpunktierten Linien 44, 46 angedeutet. Diese Zwischenpositionen 44, 46 werden zusätzlich dazu genutzt, um Teile - wie durch die Ziffer 70 angedeutet - mittels einer Schleuseneinrichtung 52 aus dem Arbeitsraum 14 auszuschleusen oder in diesen einzuschleusen. Hierzu ist auf der Schottwand 42 eine Schleuseneinrichtung 52 angeordnet, die eine in Richtung der Schottwand 42 verlaufende Längsführung 50 sowie einen darauf in Richtung des Pfeiles 72 hin- und herverschiebbaren Schlitten 48 aufweist. Zum Antrieb des Schlittens 48 ist eine etwa birnenförmige Führungskurve 54 vorgesehen, mit der der Schlitten 48 über ein Führungselement 74 in Form einer darin beweglichen Rolle gekoppelt ist. Wird die Dreheinheit 22 somit von der in Fig. 1 ausgezogen gezeichneten Position aus in Richtung des Pfeiles 76 im Uhrzeigersinn bewegt, so bewegt sich der Schlitten 48 zu der in Fig. 1 strichpunktiert gezeichneten Position unterhalb des Portalmoduls 58. Diese Position wird zur automatischen Übergabe von Teilen 70 in oder aus dem Schlitten 48 verwendet.

In dieser Position in den Schlitten 48 eingelegte Teile können nach einer Drehung um 90° etwa in die in Fig. 1 ausgezogen dargestellte Position des Schlittens 48 aus diesem entnommen werden, wobei zuvor zweckmäßigerweise das in Fig. 1 linke Verkleidungselement 38 nach rechts verschwenkt wird. Um eine räumliche Trennung zwischen SPC-Teilen und NIO-Teilen zu gewährleisten, wird die in Fig. 1 in der linken Hälfte der Dreheinheit 22 gezeichnete Position 46 zur Entnahme und zum Einlegen von SPC-Teilen in den Schlitten 48 verwendet, während die gegenüberliegende Position, bei der sich der Schlitten 48 auf der Schottwand 42 ganz nach rechts bewegt hat, und die am Stapel durch die Ziffer 44 angedeutet ist, zur Entnahme von NIO-Teilen verwendet wird, wozu wiederum zweckmäßigerweise zunächst das bewegliche Verkleidungselement 40 nach links vor das mittlere Verkleidungselement 39 verschwenkt wird.

Auf diese Weise läßt sich eine saubere räumliche Trennung zwischen SPC-Entnahme im Bereich des Verkleidungselementes 38 und NIO-Entnahme im Bereich des Verkleidungselementes 40 gewährleisten, um so Verwechslungen zu vermeiden.

Es versteht sich, daß für eine ausreichende Zugänglichkeit des Schlittens 48 zum Einlegen oder zum Entnehmen von Teilen 70 nicht die gesamten Verkleidungselemente 38 bzw. 40 verschwenkbar sein müssen, sondern daß es ggf. auch ausreichend sein kann, die jeweiligen Verkleidungselemente 38 bzw. 40 im oberen Bereich in Griffhöhe des Schlittens 48 verschwenkbar zu machen.

Innerhalb des Arbeitsraumes 14 ist ferner noch ein Bereitstellungsmodul 18 vorgesehen, der als Palettenumsetzer ausgebildet ist und zwei getrieblich miteinander zwangsgekoppelte Schwingen 78, 80 aufweist, die derart miteinander gekoppelt sind, daß sich durch eine Drehung der ersten Schwinge 78 eine annähernd U-förmige Bewegungsbahn ergibt, durch die einzelne Werkstückträger zwischen dem Bereitstellungsplatz 24, einem erhöhten Zuführplatz 25 unterhalb des Portalmoduls 58 und einem Warteplatz 27 am gegenüberliegenden Ende des Arbeitsraumes 14 hin- und herstapeln lassen. Somit lassen sich einzelne Werkstückträger von dem Bereitstellungsplatz 24 aus mittels des Bereitstellungsmoduls 18 entnehmen und zu dem erhöhten Zuführplatz 25 unterhalb des Portalmoduls 58 überführen, so daß mittels des am Schwenkarm 64 des Schlittens 60 vorgesehenen Greifers daraus Teile entnommen werden können oder in diesem abgelegt werden können und durch eine weitere Verdrehung der beiden Schwingen 78, 80 an dem danebenliegenden Warteplatz 27 abgelegt werden können.

Durch Kombination des Bereitstellungsmoduls 18, des Stapelaustauschmoduls 20 und des Portalmoduls 58 mit dem darauf verfahrbaren Schlitten 60 mit dem Schwenkarm, an dem ein nicht dargestellter Greifer vorgesehen ist, lassen sich somit Teile von dem Ladeplatz 26 außerhalb des Arbeitsraumes 14 zunächst in den Arbeitsraum 14 überführen und sodann in geeigneter Weise ggf. auf den Warteplatz 27 umstapeln und zur Überführung zur Bearbeitungseinrichtung 12 mittels des Portalmoduls 58 positionieren.

Dabei ist der Ladeplatz 26 in Richtung eines außerhalb des Arbeitsraumes 14 an der Dreheinheit 22 durch die drei um die vertikale Drehachse 36 verschwenkbaren Verkleidungselemente 38, 39, 40 nach außen geschützt und wahlweise zugänglich, um einen Werkstückträgerstapel zum Ladeplatz 26 einzuführen oder aus diesem auszufahren.

## Patentansprüche

1. Handhabungssystem zur Versorgung einer Bearbeitungseinrichtung (12) mit Teilen (70), mit einem Arbeitsraum (14), innerhalb dessen ein Bereitstellungsmodul (18) zur Bereitstellung und Aufnahme von Teilen (70) vorgesehen ist, mit einem Stapelaustauschmodul (20) zum Ein- und Ausschleusen von Teilen (70) in bzw. aus dem Arbeitsraum (14), wobei der Stapelaustauschmodul (20) eine um eine vertikale Drehachse (36) verdrehbare Dreheinheit (22) aufweist, an der ein Bereitstellungsplatz (24) innerhalb des Arbeitsraumes (14) und ein Ladeplatz (26) zum Be- und Entladen von Teilen (70) außerhalb des Arbeitsraumes (14) vorgesehen sind, wobei die Dreheinheit (22) in zwei um 180° gegeneinander versetzte Arbeitspositionen (28, 30) verdrehbar ist, um Teilestapel auf den Bereitstellungsplatz (24) zu überführen und von diesem auf den Ladeplatz (26) zu überführen, dadurch gekennzeichnet, daß der Ladeplatz (26) durch mindestens ein um die vertikale Drehachse (36) verschwenkbar angeordnetes Verkleidungselement (38, 39, 40) nach außen abgegrenzt ist.

2. Handhabungssystem nach Anspruch 1, dadurch gekennzeichnet, daß der Arbeitsraum (14) durch eine Schutzverkleidung (16) nach außen abgeschlossen ist, und daß an der Dreheinheit (22) eine Schottwand (42) vorgesehen ist, durch die der Bereitstellungsplatz (24) und der Ladeplatz (26) in den beiden Arbeitspositionen (28, 30) voneinander getrennt sind.

3. Handhabungssystem nach Anspruch 1 oder 2, dadurch gekennzeichnet, daß ein mittleres bewegliches Verkleidungselement (39) vorgesehen ist, das an beiden Seiten durch je ein bewegliches Verkleidungselement (38, 40) ergänzt ist, um den Ladeplatz (26) vollständig nach außen abzugrenzen.

4. Handhabungssystem zur Versorgung einer Bearbeitungseinrichtung (12) mit Teilen (70), mit einem Arbeitsraum (14), innerhalb dessen ein Bereitstellungsmodul (18) zur Bereitstellung und Aufnahme von Teilen (70) vorgesehen ist, mit einem Stapelaustauschmodul (20) zum Ein- und Ausschleusen von Teilen in bzw. aus dem Arbeitsraum (14), wobei der Stapelaustauschmodul (20) eine um eine vertikale Drehachse (36) verdrehbare Dreheinheit (22) aufweist, an der ein Bereitstellungsplatz (24) innerhalb des Arbeitsraumes (14) und ein Ladeplatz (26) außerhalb des Arbeitsraumes (14) vorgesehen sind, wobei die Dreheinheit (22) um zwei um 180° gegeneinander versetzte Arbeitspositionen (28, 30) verdrehbarist, um Teilestapel auf den Bereitstellungsplatz (24) zu überführen und von diesem auf den Ladeplatz (26) zu überführen, insbesondere nach Anspruch 1, 2 oder 3, dadurch gekennzeichnet, daß die Dreheinheit (22) zusätzlich zu den um jeweils 180° gegeneinander versetzten Arbeitspositionen (28, 30) in zumindest eine Zwischenposition (44, 46) verdrehbar ist, in der zumindest ein Zusatzmodul zur Handhabung von Teilen aktivierbar ist.

5. Handhabungssystem nach Anspruch 4, dadurch gekennzeichnet, daß die Dreheinheit (22) zumindest in zwei Zwischenpositionen (44, 46) verdrehbar ist, die gegenüber den beiden Arbeitspositionen (28, 30) jeweils um 90° versetzt sind.

6. Handhabungssystem nach Anspruch 4 oder 5, dadurch gekennzeichnet, daß die Dreheinheit (22) eine Schleuseneinrichtung (52) aufweist, die ein Ein- und Ausschleusen von Teilen (70) in den Zwischenpositionen (44, 46) ermöglicht.

7. Handhabungssystem nach Anspruch 6, dadurch gekennzeichnet, daß die Schleuseneinrichtung (52) eine mit der Dreheinheit (22) zwangsgekoppelte Verfahreinrichtung zum Ein- bzw. Ausschleusen von Teilen (70) aufweist.

8. Handhabungssystem nach Anspruch 7, dadurch gekennzeichnet, daß die Verfahreinrichtung einen Schlitten (48) aufweist, der auf einer zwischen dem Bereitstellungsplatz (24) und dem Ladeplatz (26) verlaufenden Führung (50) verfahrbar ist, und der über ein in der Führungskurve (54) geführtes Führungselement (74) antreibbar ist.

9. Handhabungssystem nach Anspruch 8, dadurch gekennzeichnet, daß die Führung (50) an der Schottwand (42) befestigt ist.

10. Handhabungssystem nach einem der Ansprüche 6 bis 9, dadurch gekennzeichnet, daß eine erste Zwischenposition (46) zur Be- und Entnahme von SPC-Teilen vorgesehen ist und eine räumlich davon getrennte Zwischenposition (44) zur Entnahme von NIO-Teilen vorgesehen ist.
